# EUROPEAN PATENT SPECIFICATION

(11) **EP 2 577 784 B1**
(45) Date of publication and mention of the grant of the patent: **29.03.2017**
(21) Application number: 11741470.6
(22) Date of filing: 26.05.2011
(51) Int. Cl.: H01M 8/04014, H01M 8/04007, H01M 8/04089, H01M 8/04701, H01M 8/04746, H01M 8/124

(54) **METHOD AND ARRANGEMENT TO CONTROL THE HEAT BALANCE OF FUEL CELL STACKS IN A FUEL CELL SYSTEM**
VERFAHREN UND ANORDNUNG ZUR STEUERUNG DES WÄRMEAUSGLEICHS VON BRENNSTOFFZELLENSTAPELN IN EINEM BRENNSTOFFZELLENSYSTEM
PROCÉDÉ ET AGENCEMENT PERMETTANT DE COMMANDER LE BILAN THERMIQUE DE BLOCS DE PILES À COMBUSTIBLE DANS UN SYSTÈME DE PILES À COMBUSTIBLE

(30) Priority: 04.06.2010 FI 20105636
(43) Date of publication of application: 10.04.2013
(73) Proprietor: Convion Oy, 02150 Espoo (FI)
(72) Inventor: ÅSTRÖM, Kim, FI-02460 Kirkkonummi (FI); HOTTINEN, Tero, FI-08680 Lohja (FI)
(74) Representative: LEITZINGER OY
(86) International application number: PCT/FI2011/050487
(87) International publication number: WO 2011/151510

(56) References cited:
- WO-A2-2006/072652
- US-A1- 2008 020 247

## Description

### Object of the invention

An object of the present invention is a method to control the heat balance of fuel cell stacks in a fuel cell system, said fuel cell system comprising at least one fuel cell unit whose fuel cells include an anode side and a cathode side, as well as an electrolyte interposed there between, and a recuperator unit for preheating a supply flow of the cathode side. Another object of the invention is a fuel cell system applying the method.

### Prior art

The invention relates specifically to SOFC type fuel cell systems (solid oxide fuel cell), in which the generally employed essential material component is nickel.

As it comes to heat balance of SOFC type fuel cell systems, one of the main problems is rather intensive variation that takes place in the heat generation during their life period. In the early stages of their service time heat generation is limited. As the degradation of the stacks eventually proceeds, however, the electrical efficiency deteriorates thus leading to increase in heat generation while the production of electricity tends to decrease.

In addition, with the development of current stack performance it is expected that the area specific resistance (ASR) of the stacks will decrease. This means that the electrical efficiency will increase with the cost of decrease in heat generation in the stacks. In high temperature fuel cell systems, such as SOFC, there are in terms of overall heat balance always notable heat losses to the surroundings due to practical mechanical and cost reasons.

We are already facing the fact, that in the early stages of a life time of the stacks, when their electrical efficiency lies at the top and the heat generation is at minimum, the heat energy contained in the exiting hot air flow from the stacks is not necessarily adequate to sufficiently warm up the supply air flow entering the stacks. That is to say, normally the supply air flow is heated by a heat exchanger, so called recuperative unit, in which the secondary flow is in form of the exit flow from the cathode side.

The exiting air flow from the cathode side of the stacks is, thus, not warm enough. The temperature difference dT in the heat exchange unit required for a sufficient supply air warm up would have to be set extreme small. This would require heat exchange areas that were out of proportion and would thus mean oversized heat exchange units.

Once the degradation of the stacks proceeds along their service life and the heat generation increases, the heat energy contained in the exit air starts to cover up the requirement set up by the supply air preheating and the supply temperature on the cathode side is gained with more ease.

However, as a result of the impaired electric efficiency of the stacks, the amount of supply air to the cathode side needs to be raised even up to quadruple in relation to a stoichiometric burning. This is in order to maintain constant electric power generation even when the service life of the stacks is getting close to its end.

This, in turn, has as an inevitable consequence of a series of further drawbacks. First of all, an increase on the supply air flow increases the internal energy consumption for supplying the air, thus reducing output power and efficiency. This for one's part further boosts the voltage drop caused by the degradation phenomena. This, in turn, means substantial descent of the electric efficiency of the system. Since the general aim is to maintain the total power of system as constant as possible, the compensation of the descending efficiency by increased fuel supply together with boosted supply air flow, is ensued by a considerable increase on heat generation by the stacks. In addition, in pursuance of the increase on supply flow rate, pressure losses get up as well. This further has negative impact on systems'electric efficiency. All in all, we are facing an inevitable vicious circle as the very end of service life of the stacks draws closer.

On the other hand, to compensate heat losses and varying heat generation, there are a few methods of type state of the art that could be used, however. One is for instance to decrease the flow rate of the supply air flow, especially at early stages of service life of the fuel cells. Another possibility is to bring increase in external reforming rate. These methods have, unfortunately, their own limitations. The air flow cannot be decreased unrestrictedly since there are rather strict limitations on the oxygen utilization rates allowed by the stacks. On the other hand an active control of external reforming is difficult accomplish without increasing the complexity of process topology.

WO2006/072652 A2 describes an arrangement in fuel cell apparatuses for processing the leakage gases of fuel cells, the fuel cell apparatus comprising at least a fuel cell unit. The fuel cell unit is surrounded by a fire-proof casing provided with a combustion space, the combustion space of the casing being combined with an inlet for introducing oxygen-containing gas into the combustion space.

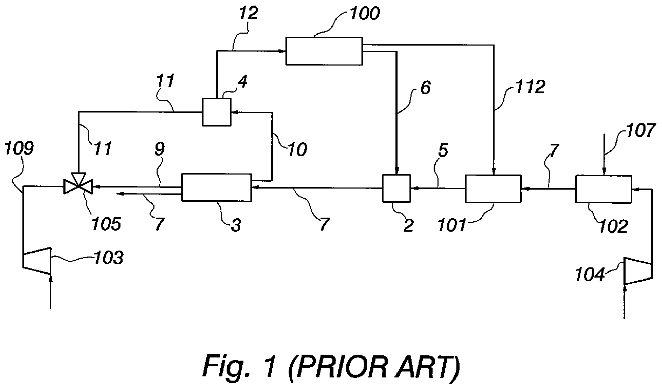

In addition, one more solution of type prior art for the problem is offered by US2008/002047A1. One of the main objects there as well is to promote preheating of air to cathode side of the fuel cell. The system is presented most schematically in Figure 1.

The heating of the supply air 12 to the cathode side of the fuel cell unit 100 is based on utilizing the heat energy gained by the afterburner 101. For this purpose there is arranged a special recuperator unit including mixers 2 and 4 as well as heat exchanger 3. The exit streams 5, 6 from anode and cathode side are first mixed therein in mixer 2. The evoked stream 7 is then utilized for warming up fresh cold supply air 9.

The final temperature adjustment of the supply stream 12 to the stacks 100 takes place not until after this stage. For this purpose an air by-pass 11 is arranged. The by-pass air is mixed together with the heated air 10 in mixer 4. The adjustment of the supply temperature to the cathode side is carried out by regulating the amount of cold air 10 mixed with the warm air 11. In other words, the supply air of the cathode side is first heated up over the set target temperature and then leveled down to the set value with the help of the cold air.

First of all, a solution of this kind means problems of type very general such as increased complexity, an unnecessary heat exchanger unit as well as increased demand for piping within an already cramped layout.

However, a particular drawback is caused by the fact that, since the temperature adjustment of the supply air on the cathode side is based on controlling the amount of extra cold air, the total mass flow of the air stream varies at a rather notable range. This makes it very difficult to control the total supply air flow entering the cathode side.

It also becomes difficult to make adjustments in favour of adapting the system to the degradation phenomena. Eventually the above explained problems related to oversized heat exchangers and excessive piping come against once more. In addition the complex system and increased piping lead to further increase in pressure losses and generally inefficient functioning of the whole system.

Still another disadvantage is emerged by the fact that in case the afterburning stage is entirely performed prior to the recuperator unit, firstly humidity is increased, and secondly, the ascended temperature levels (typically above +1000°C) set high requirements on materials. That is to say, the expenses on materials would be set unreasonable.

Therefore, a flexible heat balance control and compensation method is needed in different life points of the systems as stacks degrade, i.e. their ASR increase causing a significant increase in heat production. The heat balance within both the fuel cells and fuel cell stacks as well as within the vicinity of the fuel cell units including the related heat exchange units needs to be maintained despite the amount of internal heat production.

### Objective and solution of the invention

An objective of the invention is to provide a solution by which the above-mentioned prior art problems could be alleviated or completely eliminated. In order to achieve this objective, a method according to the presently specified invention is characterized by what is set forth in the characterizing clause of claim 1. On the other hand, the characterizing features of a fuel cell system implementing the method of the invention are set forth in the characterizing clause of claim 8. In addition, a few preferred embodiments of the invention are presented in the dependent claims.

The invention now provides a solid solution for the problem explained above. According to the invention, a desired portion of the used fuel stream exiting the anode side is bled from the main stream, and further, oxidized by the cathode exit flow to produce extra heat for further use.

In other words, the invention generally comprises a process topology that allows partial burning of spent fuel specifically before the actual afterburner in the system. When a small fraction of the depleted fuel from the stack exhaust is burned within the cathode side exit flow, a substantial increase on temperature is gained. It should be emphasized that according to the invention only a small part of the total exit flow from the anode side is separated from the main flow and, above all, this is performed prior to the recuperator unit.

On one hand, the separated substream bled from the main flow can be guided straight back to the stack compartment. In this case it is oxidized outside the fuel cell, i.e. between the fuel cell stacks and the outer wall of the stack compartment. This is also where all the fuel, that normally leaks out of the stacks, is oxidized.

A suitable space can easily be arranged or chosen for this purpose. Any additional structures for this purpose can, thus, be avoided. On the other hand, the separated fuel can be oxidized within the cathode side exit flow outside the stack compartment itself. In practice, the fuel portion divided from the main exit residue fuel flow is simply guided into the cathode side exit line and mixed and oxidized therewith thus increasing the temperature prior to the recuperator unit.

According to the preceding embodiment of the invention, the bled fuel is further guided into the stack compartment and the flue gases from this burning are guided together with the exit flow from the cathode side to the recuperator unit and further out of the whole system. This particular embodiment further comprises an extra benefit in that the heat energy gained by burning part of the used fuel can now be directed at the stacks with an efficient manner. Temperature increase also takes place in the outlet fuel flow compensating the heat losses through the structures of the stack compartment that is lost within the mentioned process flows. In addition, the burning within the stack compartment offers a possibility to boost the preheating of supply stream on the cathode side thanks to the substantially increased exit temperature of the exit flow on cathode side.

The latter embodiment offers most simple opportunity to improve the heat balance of fuel cell systems in case of retrofitting. Just one single line joining anode side exit line and cathode side exit line together with appropriate control means is needed. In addition, since the oxidation takes place outside the stack compartment and the fuel is continuously flushed out of the whole system, risks related possible self-ignition of fuel around the self-ignition temperature level for instance during start-up are abolished.

The surprising solution according to the invention has been chosen even despite the fact that this kind of assembly eventually leads to further increase in water content in the exit flow from the cathode side. This has another negative impact on requirements concerning materials, especially as it comes to the recuperator unit. However, it has been discovered that despite the increased risk for material related problems, the invention offers far better means for controlling the overall heat balance of the whole system and better usability thereby throughout its service life.

### Advantages provided by the invention

The invention offers effective means for adjusting the overall heat balance of the system due the increasing heat generation resulting from the degradation of the fuel cells. The main benefits gained by the invention are based among others on the following facts.

It is a principal concept of the invention that since during early stages of the service life the additional heat generation is taken specifically from spent fuel, this does not affect the electrical efficiency of the system. And further, since the fuel is not taken from the stack inlet, it does not have any effect on the fresh fuel utilization and as the anode recirculation composition does not change, the recirculation is not affected either. Only place where the change is seen in the process is afterburner which now receives less fuel and hence less heat is generated at that location.

Worth noticing is also the fact that the amount of fuel divided from the main fuel residue flow exiting the anode side is now adjusted and controlled in a most active manner. The adjustment performance itself can be carried out in by very straightforward way. The amount of fuel is separated from the main fuel flow exiting the anode side such that the temperatures, especially the one of the cathode side supply air flow exiting the recuperator unit, are maintained at desired levels and the heat balances are stabilized in an solid manner. The increase in the heat generation due to the degradation of the fuel cells can thus be effectively compensated by reducing the bled residue fuel flow back to the stacks according to the invention.

One of the essential benefits about the invention is that it now makes it possible to use a substantially constant air mass flow throughout the service life of the stacks. Typically the mass flow of supply air state of the art fuel cells accounts for about λ=4, when compared to stoichiometric burning. This means that about a quarter of the total amount of oxygen contained in the supply air entering the fuel cell is actually used in fuel cell reactions while the residue oxygen, that is to say air, is directed out of the system.

The supply flow of the cathode side can now be maintained even totally constant while the degree of the degradation is totally disregarded. It should be stressed, however, that the solution according to the invention does not necessarily require a constant supply flow. The invention simply provides an excellent extra degree of freedom to control the whole system regardless the degree of degradation and consequences thereof.

Thanks to the substantially stabilized air streams, it is now far more easier to bring the recuperator unit in correspondence with its initial dimensioning. Undesirable overdimensioning is needed no more.

Other dimensioning problems as described above both in terms of heat exchange areas and stream piping are avoided as well. Another advantage is gained in that the extra heat exchange unit after the afterburner is avoided. And further, a clear benefit can be found by the fact that a separate air by pass for temperature control can be eliminated in case not needed otherwise.

As it comes to the benefits against the above recited US2008/002047A1, a special advantage accomplished by the invention is the absolute reduction of temperature and humidity related stress on the recuperator unit. Thanks to restrained temperatures and lowered moisture content of the gases flowing through when compared to the prior art solution, there is emerged a notable saving potential of costs related to both construction and maintenance of the recuperator unit.

Further advantages produced by the invention becomes evident together the following advantageous embodiments.

### List of figures

The invention will now be described in more detail with reference to the accompanying drawing, in which:
- Figure 1: shows a highly schematic view of an arrangement according to prior art,
- Figure 2: shows a highly schematic view of an arrangement according to an advantageous embodiment of the invention, wherein a portion of the exhaust gas from anode side is redirected into the fuel cell compartment and oxidized therein,
- Figure 2a: shows in a close-up view of area A of Fig. 2 a highly schematic view of another arrangement according to the invention, wherein a portion of the exhaust gas from anode side is bled directly inside the fuel cell compartment, and
- Figure 3: shows in a close-up view of a section of a residue fuel line stack compartment including means for bleeding.

### Detailed description of the invention

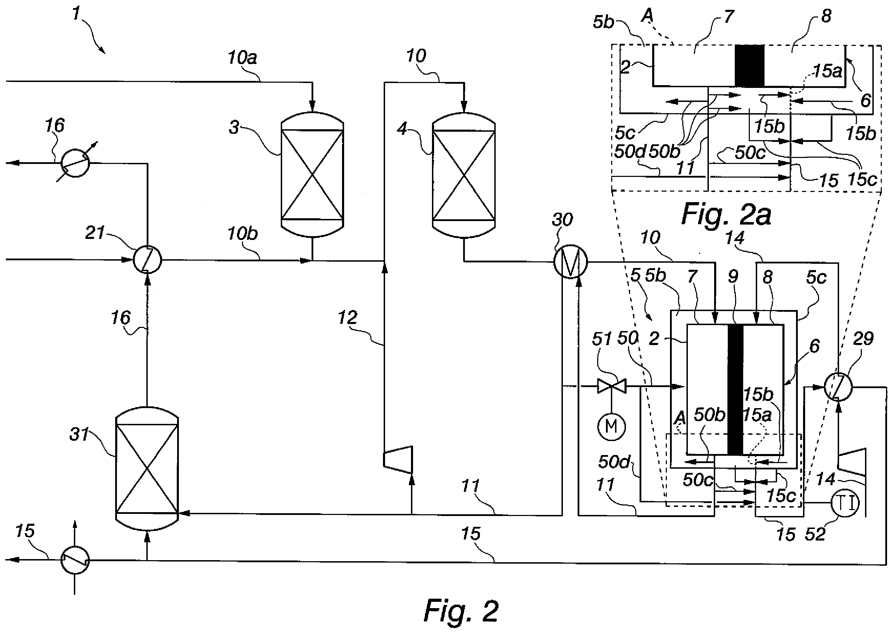

Fig. 2 shows a fuel cell system 1 in a highly schematic view. A fuel cell unit 5, included therein, comprises one or more fuel cell stacks 6, consisting of successively series-connected fuel cells 2, featuring an anode side 7, a cathode side 8 and an electrolyte 9 provided therebetween, as well as a connecting plate, a so-called interconnect, set between individual fuel cells (not shown). For the sake of clarity, fig. 1 only shows just one fuel cell stack 6 of the fuel cell unit 5 in the form of a single fuel cell 2. The number of fuel cell stacks is, of course, not limited by any means to a certain value. Numerous or even a single unit can be used.

In this application, the anode side 7 refers generally both to anode electrodes included in the fuel cells 2 of the fuel cell units 5 and, from the perspective of fuel, to components for conducting the fuel within the confines of the fuel cell units 5 to the anodes of actual individual fuel cells and to components for further conducting the gases away from the anodes. Respectively, the cathode side 8 refers to cathodes, as well as to components provided for conducting air to and from the cathodes within the confines of the fuel cell units 5.

In addition, for feeding fuel gas, the anode side 7 is provided with supply means, represented here solely by a supply line 10. In figure 2, the fuel enters the system 1 through line 10a and goes here first into a desulphurizer 3. Together with possible recycled fuel in line 12 as wells as steam coming from line 10b, the established flow enters next a prereformer 4 or the like possible fuel pretreatment device.

There are likewise provided means for discharge the fuel cell unit of spent fuel gas outgoing from the anode side 7. Here, these are only represented by a discharge line 11. Naturally, there may be a plurality of such lines 10, 11. The exit flow 11 is then guided via heat exchanger means 30 to heat up the entering supply fuel in line 10. Part of the fuel is recycled through line 12 while the rest is led to an afterburner 31. The heat thereof is used among others on producing steam in unit 21 which is directed into line 10b to be used in the prereformer 4.

On the cathode side air is supplied through line 14, which is then divided to be delivered to fuel cell stacks 6 and further to individual fuel cells 2. Correspondingly, the air coming from the fuel cells 2 composing thereby an exit flow 15 further exits the fuel stack compartment 5c and is guided thereafter to flow via a recuperator unit 29 to heat up the supply air flow 14. Also here all the piping is presented just by a single line for the sake of clarity. Various possibilities to guide the exit flow from the stacks and to arrange a suitable piping or alike for this purpose is illustrated by an dashed line section 15a between the stacks 6 and the outer wall or shell 5c of the stack compartment.

In addition, an advantageous embodiment of the invention is presented in figure 2. According to the invention, there is now provided a bleeding from fuel exhaust line 11, i.e. partially used fuel. In this embodiment, the bleeding itself is not accomplished directly within the stack compartment 5c. Instead this takes place after the heat exchange between the supply line 10 and discharge line 11 of the anode side 7. This is thus a later point in the fuel exhaust line 11. In this preferred embodiment of the invention, a desired portion,- which itself is advantageously alterable -, of the fuel is separated and the separated fuel stream 50 is re-routed back into the surroundings 5b within the fuel cell compartment 5c. This portion is dependent especially on both stack condition and load rate. The temperature values measured for instance by means 52 can also be used in the determination of the amount of residual fuel to be separated from the exit flow 11. Once the fuel stream has entered the hot volume 5b of fuel cell compartment it is oxidized instantly.

In addition, since the separation of the divided portion of the fuel stream from the fuel exhaust line 11 takes now place at rather a low temperature level (for instance in the range between +100-+400°C), a cost-effective use of a standard type valve or alike regulating element 51 is made possible. This means an easily implementable, reliable and accurately controllable control of the bleeding for the purpose of heat balance adjustment and makes it, thus, an utmost cost-efficient embodiment of the invention.

It should be noted, that the term 'recuperator' for unit 29 could be replaced generally by heat exchanger. Any heat exchange equipment suitable for heat exchange participated by the cathode side supply flow is, thus, covered. On the other hand, the utilized heat energy for preheating can originate also from other sources than just the exit flow 15 of the cathode side 8. In overall, recuperation procedure covers here heat exchange activities outside the stack compartment 5c for substantial preheating of at least part of the supply flow 14 of the cathode side 8. Some other minor measures before and/or after the recuperator unit 29 are, however, possible.

The present invention covers also necessary proceedings in order to secure a correct flow direction of the fuel that bleeded from the anode side according to the invention. In other words, the bleeding is preferably arranged such that the pressure difference between anode side and cathode side around the bleeding point is positive. That is to say, the higher pressure on the anode side ensures that the fuel flows towards lower pressure level on the cathode side.

The pressure difference is preferably above 5mbar, most preferable within a range of 10-50mbar. These values have no limiting significance, however. Much higher values are quite as acceptable as well and basically any positive pressure difference is adequate for the purpose. The management of the pressure difference can be arranged either within the very surroundings of the bleeding point or at larger scale within the various units, compartments and/or flow loops of the fuel cell system.

The flow direction can also be assured by suitable means, such as valves or gates, to prevent any flow occurring in opposite direction. The intended degree of the fuel flow can also be boosted with suitable means to create or boost a forced flow like feeders or blasters of suitable type.

### A few other embodiments of the invention

The arrangement provided by the invention is by no means limited to the immediately above described embodiment, the sole purpose of which is only to explain the main principles of the invention in a simplified manner and construction.

There are also a couple of other possible arrangements to implement the invention. Another advantageous embodiment comprises an oxidation of the bled fuel taking place expressly outside the stack compartment 5c. The fuel stream is divided from the anode side exit flow 11, and instead of mixing it with the cathode side exit flow within the stack compartment, the mixing takes place specifically outside the stack compartment within the cathode side exit piping line 15, prior to the recuperator 29. The mixing is preferably adapted to be carried out such that any flame formation from the fuel oxidation will not occur within the recuperator 29. That is to say, the oxidation reaction takes place substantially before the recuperator such that the heat generated therein is more or less scattered to the whole flow 15. The burning itself can be accomplished by suitable means for burning, heat protection and flame control within the piping line 15 of the cathode side exit flow.

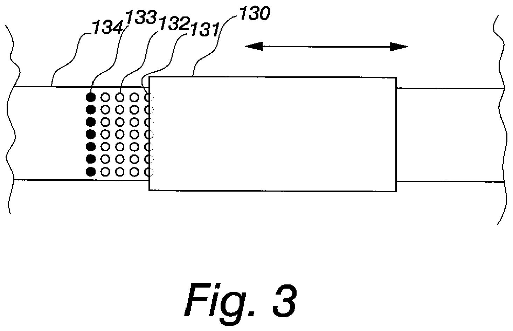

It is also possible to perform the bleeding of fuel directly from the stack fuel outlet piping 11 within the volume 5c inside the stack compartment 5b as shown by lines 50b. This can be accomplished for instance with properly sized holes drilled into the piping as illustrated in Figure 3. The required heat balance adjustment can be taken care by air flow and the amount of holes 132 could be reduced during service break when the adjustment window of air flow is getting too narrow.

It should be noted here, that the way the cathode side exit flow 15 is established within the stack compartment 5c is by no means restricted by this invention. It is possible to let the exit air stream out of the fuel cells 2 and then guide is out from the compartment 5c either via one single exit line 15 or via several lines which then can be connected together as shown by lines 15c. The exit air can also be lead in a more controlled manner via suitable ducts 15b arranged to fuel cell stacks which can be joined together either within the stack compartment 5c or outside the compartment. The degrees of freedom on how to arrange the routing of cathode side exit flow 15, 15b, 15c are basically numerous depending on the means for mixing the bleeded fuel to the exit air flow 15.

In particular, a notice is made on one the advantages of the above explained embodiment of the invention which comprises a more or less all-embracing spooling of the stacks by the exit air from fuel cells. That is to say, the exit air is allowed to flow freely to spool the whole stack compartment space 5b prior to exiting through discharge openings arranged for this purpose. In other words, once the fuel has been bleeded from the anode side 7 - no matter whether this takes place outside or inside the stack compartment 5c-an efficient and guaranteed oxidation and spooling of the fuel is assured by the exit air flow from the cathode side 8 in the vicinity around the stacks 5 within the space 5b of the compartment 5c. And further, this specifically takes place prior to exit from the compartment 5c. Any accumulation of unoxidized fuel is excluded.

The latter embodiment of the invention explained above comprises again another advantage. That is to say, once the bleeded fuel is mixed with the exit air of the cathode side specifically outside the stack compartment, for instance within the piping line 15 prior to recuperator unit 29, an advantage is gained in that here need for spooling in the stack compartment does not exist. The unavoidable leaking phenomenon of fuel that normally takes place in the fuel cell themselves, needs, of course, to be managed. However, since the temperature levels are normally safely above the self-ignition point, this spooling need of fuel is diminished by an instant oxidation by the cathode side exit air. Whilst the fuel is finally mixed with the exit air, for instance alongside with the exit flow piping line 15, the exit flow 15 itself normally assures an adequate spooling effect.

Another possible alternative to arrange the bleeding of the fuel is basically the same as in the previously explained embodiment of the invention. However, in this case the bleeding 50b is controllable in more a continuous manner. This can be carried out with a hot "valve"-element 51 (not shown) connected to the fuel outlet line 11 within the compartment 5c. This embodiment allows a direct and active controllability of the heat balance without the need of modifying fixed bleeding holes during the lifetime of the stacks.

Overall, the control of the amount of bled fuel can be carried out by any suitable know methods, that are applicable for adjusting mass flow of a separated flow from main flow. A few of this kind are presented in Figure 3. There are cylindrical control means 130, which closes/opens exit openings 132 as needed or adjust the size of the open portion 131 of the openings, are arranged substantially in a gas tight or pressure tight manner around line 134 (corresponds to 11). On the other hand one or more of the openings can be arranged to be sealed 133 if needed. Various valve type means can be used as well.

Another minor possibility is further emerged by performing the bleeding at least in part outside the stack compartment 5c prior to heat exchanger 30 thus reducing the temperature level in the surroundings of the means for bleeding. This embodiment is depicted by route 50c in fig. 2 and 2a. Also here a back up is arranged for valid pressure difference and/or correct flow direction between anode and cathode side. Required means for assuring a proper feed of the fuel as well as a safe flow control are not shown.

One more possibility according to yet another embodiment of the invention is comprised in that the fuel is bleeded after the heat exchanger 30 according to line 50 in fig. 2. However, instead of feeding the fuel back to the stack compartment, the fuel can be guided through line 50d directly to exit flow line 15 and mixed therein. In this case any measurements within the stack compartment are once more avoided. Most simple and low cost implementation of the invention is achieved. All these embodiments above can be combined with each other as well.

We now take a look back at the first embodiment presented previously and its further advantages. It should be noted that the heat transfer of the heat energy gained by burning the separated fuel residue can be arranged to be of type direct in the fuel cell stack compartment. At the same time various temperature differences within the compartment can by reduced.

Thanks to the effective warming of the stacks the arrangement according to the invention makes it also possible to perform a boosted final warm up of the system up till normal operation temperature. Once an acceptable temperature level has been reached in terms of self-ignition - typically in a range between +500-+600°C - and the fuel supply to the fuel cells has been started thereafter, the bleeding of the residue fuel flow according to the invention can also be started. By boosting the warm up of the fuel cell stacks with the help of fuel residue burning according to the invention, it is possible to gain substantial shortening in the warm up time of the final warm up stage. Time savings even up to 40% are possible.

In addition, according to yet another preferred embodiments of the invention it is even conceivable to boost the start up by using the above explained fuel residue burning also below the self-ignition temperature. The burning can be performed either inside or outside the stack compartment, depending on what ever arrangement is used. When operating below the self-ignition temperature, it is, however, most advisable to use suitable means for guarding the flame to prevent flame extinction. Once the flame gas been established, the heat from the burning usually prevents flame-out. Still another benefit is also arisen in that by using fuel from the very beginning of the start up, a possibility arises to avoid need for other means for warming of streams and components, such as electrical heaters for instance.

The arrangement according to the invention is also most flexible in terms of both degree of capacity utilization and operation time. The arrangement can be used for instance just when absolutely necessary, such as in the early stages of the service life of the system, when the heat generation is otherwise inadequate. On the other hand it can be used at final stage of the service life for shortening the warm up time.

Another essential benefit gained by the invention is the fact that by using an arrangement of this kind the size of the recuperator can be reduced significantly. While the heat flow from the fuel cell units is less significant at the beginning, the shortage can be compensated by increasing the secondary burning of the residue fuel within the stack compartment. In this way the oversized dimensioning of the recuperator can easily be avoided. Later on when the degradation leads to increased heat generation, the burning can be closed down as the recuperator becomes capable of warming the supply air in a sufficient manner.

## Claims

1. Method to control the heat balance of fuel cell stacks (6) in a fuel cell system (1), said fuel cell system (1) including at least one fuel cell unit (5) comprising fuel cell stacks (6), whose fuel cells (2) include an anode side (7) and a cathode side (8), as well as an electrolyte (9) interposed therebetween, **characterized in that** a desired portion is separated from the fuel exhaust flow (11) of the anode side (7) and supplied into fuel stack compartment (5b) surrounding the fuel cell units (5)

2. Method according to claim 1, **characterized** that the portion separated from the fuel exhaust flow (11) of the anode side (7) is adapted to be mixed with the cathode side (8) exit flow (15) before a recuperator unit (29) arranged for preheating a supply flow (14) of the cathode side (8).

3. Method according to claim 1 or 2, **characterized in that** said portion lies between 0-50%, preferably between 0-15%, most appropriately between 0-12%.

4. Method according to any of claims 1-3, **characterized in that** the separation of the said portion from of the fuel exhaust flow (11) is accomplished after heat exchange arranged between said exhaust flow (11) and a fuel supply flow (10) entering the anode side (7) of the fuel cells (2).

5. Method according to any of claims 1-4, **characterized in that** at least a part of the said portion is bled from the stack fuel outlet flow (11) already within the stack compartment (5b) that surrounds the fuel cells (2).

6. Method according to claim 5, **characterized in that** the said bleeding is accomplished in the stack compartment (5b) by suitable means therefore arranged to the piping of the said fuel exhaust flow (11).

7. Method according to any of claims 1-5, **characterized in that** the control of the bleeding is accomplished by using active control of the pressure on the anode side (7).

8. Heat balance control arrangement of fuel cell stacks (6) in a fuel cell system (1), said fuel cell system (1) including at least one fuel cell unit (5) comprising fuel cell stacks (6), whose fuel cells (2) include an anode side (7) and a cathode side (8), as well as an electrolyte (9) interposed therebetween, **characterized in that** a desired portion has been adapted to be separated from the fuel exhaust flow (11) of the anode side (7) and to be supplied into the fuel stack compartment (5b) surrounding the fuel cells (2).

9. Arrangement according to claim 8, **characterized in that** the portion separated from the fuel exhaust flow (11) of the anode side (7) has been adapted to be mixed with the cathode side (8) exit flow (15) prior to entering a recuperator unit (29) arranged for preheating a supply flow (14) of the cathode side (8).

10. Arrangement according to claim 7 or 8, **characterized in that** said portion lies between 0-50%, preferably between 0-15%, most appropriately between 0-12%.

11. Arrangement according to any of claims 8-10, **characterized in that** the separation of the said portion from of the fuel exhaust flow (11) has been adapted to be accomplished after heat exchange arranged between said exhaust flow (11) and a fuel supply flow (10) entering the anode side (7) of the fuel cells (2).

12. Arrangement according to any of claims 8-11, **characterized in that** at least a part of the said portion has been adapted to be bled from the stack fuel outlet flow (11) already in the stack compartment (5b) that surrounds the fuel cells (2).

13. An arrangement according to claim 12, **characterized in that** the said bleeding has been accomplished in the stack compartment (5b) by suitable means therefore arranged to the piping of the said fuel exhaust flow (11).

14. Arrangement according to any of claims 8-12, **characterized in that** the control of the bleeding has been accomplished by using active control of the pressure on the anode side (7).

## Patentansprüche

1. Verfahren zum Steuern/Regeln der Wärmebilanz von Brennstoffzellenstapeln (6) in einem Brennstoffzellensystem (1), wobei das Brennstoffzellensystem (1) wenigstens eine Brennstoffzelleneinheit (5) enthält, die Brennstoffzellenstapel (6) aufweist, deren Brennstoffzellen (2) eine Anodenseite (7) und eine Kathodenseite (8) sowie einen Elektrolyten (9) enthalten, der dazwischen angeordnet ist, **dadurch gekennzeichnet, dass** eine gewünschte Teilmenge von dem Brennstoffabgasstrom (11) der Anodenseite (7) getrennt und in eine Brennstoffstapelkammer (5b) eingespeist wird, die die Brennstoffzelleneinheiten (5) umgibt.

2. Verfahren nach Anspruch 1, **dadurch gekennzeichnet, dass** der Teilmenge, die von dem Brennstoffabgasstrom (11) der Anodenseite (7) getrennt wird, dazu eingerichtet ist, mit dem Auslassstrom (15) der Kathodenseite (8) vor einer Wärmeaustauscheinheit (29) gemischt zu werden, die dafür ausgelegt ist, einen Zufuhrstrom (14) der Kathodenseite (8) vorzuheizen.

3. Verfahren nach Anspruch 1 oder 2, **dadurch gekennzeichnet, dass** die Teilmenge im Bereich zwischen 0-50%, vorzugsweise zwischen 0-15%, am meisten bevorzugt zwischen 0-12% liegt.

4. Verfahren nach einem beliebigen der Ansprüche 1-3, **dadurch gekennzeichnet, dass** die Trennung der Teilmenge von dem Brennstoffabgasstrom (11) nach einem Wärmeaustausch durchgeführt wird, der zwischen dem Abgasstrom (11) und einem Brennstoffzufuhrstrom (10) eingerichtet ist, der an der Anodenseite (7) der Brennstoffzellen (2) eintritt.

5. Verfahren nach einem beliebigen der Ansprüche 1-4, **dadurch gekennzeichnet, dass** wenigstens ein Teil der Teilmenge von dem Stapelbrennstoffauslassstrom (11) bereits innerhalb der Stapelkammer (5b) abgezapft wird, die die Brennstoffzellen (2) umgibt.

6. Verfahren nach Anspruch 5, **dadurch gekennzeichnet, dass** das Abzapfen in der Stapelkammer (5b) durch geeignete Mittel durchgeführt wird, die für diesen Zweck für die Rohrleitungen des Brennstoffabgasstroms (11) eingerichtet sind.

7. Verfahren nach einem beliebigen der Ansprüche 1-5, **dadurch gekennzeichnet, dass** die Regelung/Steuerung des Abzapfens unter Verwendung einer aktiven Steuerung/Regelung des Drucks an der Anodenseite (7) durchgeführt wird.

8. Anordnung zur Steuerung/Regelung einer Wärmebilanz von Brennstoffzellenstapeln (6) in einem Brennstoffzellensystem (1), wobei das Brennstoffzellensystem (1) wenigstens eine Brennstoffzelleneinheit (5) enthält, die Brennstoffzellenstapel aufweist (6), deren Brennstoffzellen (2) eine Anodenseite (7) und eine Kathodenseite (8) sowie einen Elektrolyten (9) enthalten, der dazwischen angeordnet ist, **dadurch gekennzeichnet, dass** eine gewünschte Teilmenge dazu eingerichtet wurde, von dem Brennstoffabgasstrom (11) der Anodenseite (7) getrennt und in die Brennstoffstapelkammer (5b) eingespeist zu werden, die die Brennstoffzellen (2) umgibt.

9. Anordnung nach Anspruch 8, **dadurch gekennzeichnet, dass** die Teilmenge, die von dem Brennstoffabgasstrom (11) der Anodenseite (7) getrennt ist, dazu eingerichtet wurde, mit dem Auslassstrom (15) der Kathodenseite (8) vor dem Eintritt in eine Wärmeaustauscheinheit (29) gemischt zu werden, die dafür ausgelegt ist, einen Zufuhrstrom (14) der Kathodenseite (8) vorzuheizen.

10. Anordnung nach Anspruch 7 oder 8, **dadurch gekennzeichnet, dass** die Teilmenge im Bereich zwischen 0-50%, vorzugsweise zwischen 0-15%, am meisten bevorzugt zwischen 0-12% liegt.

11. Anordnung nach einem beliebigen der Ansprüche 8-10, **dadurch gekennzeichnet, dass** die Trennung der Teilmenge von dem Brennstoffabgasstrom (11) dazu eingerichtet wurde, nach einem Wärmeaustausch durchgeführt zu werden, der zwischen dem Abgasstrom (11) und einem Brennstoffzufuhrstrom (10) eingerichtet ist, der auf der Anodenseite (7) der Brennstoffzellen (2) eintritt.

12. Anordnung nach einem beliebigen der Ansprüche 8-11, **dadurch gekennzeichnet, dass** wenigstens ein Teil der Teilmenge dazu eingerichtet wurde, von dem Stapelbrennstoffauslassstrom (11) bereits in der Stapelkammer (5b) abgezapft zu werden, die die Brennstoffzellen (2) umgibt.

13. Anordnung nach Anspruch 12, **dadurch gekennzeichnet, dass** das Abzapfen in der Stapelkammer (5b) durch geeignete Mittel durchgeführt wird, die für diesen Zweck für die Rohrleitungen des Brennstoffabgasstroms (11) eingerichtet sind.

14. Anordnung nach einem beliebigen der Ansprüche 8-12, **dadurch gekennzeichnet, dass** die Steuerung/Regelung des Abzapfens unter Verwendung einer aktiven Steuerung/Regelung des Drucks an der Anodenseite (7) durchgeführt wurde.

## Revendications

1. Procédé de commande du bilan thermique d'empilements (6) de piles à combustible dans un système de piles à combustible (1), ledit système de piles à combustible (1) comprenant au moins une unité de pile à combustible (5) comprenant des empilements (6) de piles à combustible, dont les piles à combustible (2) comprennent un côté anode (7) et un côté cathode (8), ainsi qu'un électrolyte (9) intercalé entre eux, **caractérisé en ce qu'**une partie souhaitée est séparée du courant d'échappement de combustible (11) du côté anode (7) et fournie à l'intérieur d'un compartiment d'empilement de combustible (5b) entourant les unités de piles à combustible (5).

2. Procédé selon la revendication 1, **caractérisé en ce que** la partie séparée du courant d'échappement de combustible (11) du côté anode (7) est adaptée pour être mélangée avec le courant de sortie (15) du côté cathode (8) avant une unité de récupérateur (29) agencée pour préchauffer un courant d'alimentation (14) du côté cathode (8).

3. Procédé selon la revendication 1 ou 2, **caractérisé en ce que** ladite partie est entre 0-50 %, de préférence entre 0-15 %, de façon plus appropriée entre 0-12 %.

4. Procédé selon l'une quelconque des revendications 1 - 3, **caractérisé en ce que** la séparation de ladite partie du courant d'échappement de combustible (11) est effectuée après l'échange thermique agencé entre ledit courant d'échappement (11) et un courant d'alimentation en combustible (10) pénétrant le côté anode (7) des piles à combustible (2).

5. Procédé selon l'une quelconque des revendications 1 - 4, **caractérisé en ce qu'**au moins une part de ladite partie est saignée du courant d'échappement de combustible (11) déjà à l'intérieur du compartiment d'empilement (5b) qui entoure les piles à combustible (2).

6. Procédé selon la revendication 5, **caractérisé en ce que** ledit saignement est effectué dans le compartiment d'empilement (5b) par un moyen approprié ainsi agencé sur la tuyauterie dudit courant d'échappement de combustible (11).

7. Procédé selon l'une quelconque des revendications 1 - 5, **caractérisé en ce que** la commande du saignement est effectuée en utilisant une commande active de la pression sur le côté anode (7).

8. Agencement de commande du bilan thermique d'empilements (6) de piles à combustible dans un système de piles à combustible (1), ledit système de piles à combustible (1) comprenant au moins une unité de pile à combustible (5) comprenant des empilements (6) de piles à combustible, dont les piles à combustible (2) comprennent un côté anode (7) et un côté cathode (8), ainsi qu'un électrolyte (9) intercalé entre eux, **caractérisé en ce qu'**une partie souhaitée a été adaptée pour être séparée du courant d'échappement de combustible (11) du côté anode (7) et pour être fournie à l'intérieur d'un compartiment d'empilement de combustible (5b) entourant les unités de piles à combustible (2).

9. Agencement selon la revendication 8, **caractérisé en ce que** la partie séparée du courant d'échappement de combustible (11) du côté anode (7) a été adaptée pour être mélangée avec le courant de sortie (15) côté cathode (8) avant de pénétrer une unité de récupérateur (29) agencée pour préchauffer un courant d'alimentation (14) du côté cathode (8).

10. Agencement selon la revendication 7 ou 8, **caractérisé en ce que** ladite partie est entre 0-50 %, de préférence entre 0-15 %, de façon plus appropriée entre 0-12 %.

11. Agencement selon l'une quelconque des revendications 8 - 10, **caractérisé en ce que** la séparation de ladite partie du courant d'échappement de combustible (11) a été adaptée pour être effectuée après l'échange de chaleur agencé entre ledit courant d'échappement (11) et un courant d'alimentation en combustible (10) pénétrant le côté anode (7) des piles à combustible (2).

12. Agencement selon l'une quelconque des revendications 8 - 11, **caractérisé en ce qu'**au moins une part de ladite partie a été adaptée pour être saignée du courant d'échappement de combustible (11) déjà à l'intérieur du compartiment d'empilement (5b) qui entoure les piles à combustible (2).

13. Agencement selon la revendication 12, **caractérisé en ce que** ledit saignement a été effectué dans le compartiment d'empilement (5b) par un moyen approprié ainsi agencé sur la tuyauterie dudit courant d'échappement de combustible (11).

14. Agencement selon l'une quelconque des revendications 8 - 12, **caractérisé en ce que** la commande du saignement a été effectuée en utilisant une commande active de la pression sur le côté anode (7).
